# EUROPÄISCHE PATENTANMELDUNG

(11) **EP 1 464 371 A1**
(43) Veröffentlichungstag der Anmeldung: **06.10.2004**
(21) Anmeldenummer: 04006774.6
(22) Anmeldetag: 20.03.2004
(51) Int. Cl.: B01D 19/04, C10M 171/00, C10M 173/00

(54) **Verbesserte wässrige Entschäumerformulierungen**

(30) Priorität: 03.04.2003 DE 10315158
(71) Anmelder: Goldschmidt AG, 45127 Essen (DE)
(72) Erfinder: Böcker, Markus, 45359 Essen (DE); Gippert, Michael, 45138 Essen (DE); Sucker, Roland, 59368 Werne (DE)

(57) **Zusammenfassung**

Die Erfindung betrifft wässrige Entschäumeremulsionen, enthaltend mindestens einen entschäumenden Wirkstoff und gegebenenfalls übliche Hilfs- und Zusatzstoffe, die dadurch gekennzeichnet sind, dass sie zur Verbesserung der entschäumenden Wirkung Organopolysiloxanverbindungen mit einer Viskosität von ≥ 1 · 10⁶ mPas als wässrige Emulsion enthalten.

## Beschreibung

Die Erfindung betrifft verbesserte wässrige Entschäumerformulierungen enthaltend mindestens eine entschäumend wirkende Verbindung und gegebenenfalls übliche Hilfs- und Zusatzstoffe die zur Verbesserung der entschäumenden Wirkung und zur Erhöhung der Stabilität bei Lagerung und Anwendung wässrige Emulsionen von hochviskosen, hochmolekularen Organopolysiloxanverbindungen enthalten.

In vielen technischen Prozessen werden grenzflächenaktive Substanzen zur Erzielung bestimmter Effekte gezielt eingesetzt.

So benötigen wässrige Kühlschmierstoffe eine Reihe von Hilfsstoffen, wie z. B. Emulgatoren zur Emulgierung der wasserunlöslichen Mineralöle und/oder auch Additive wie Korrosionsinhibitoren.

Ebenso benötigen wässrige Beschichtungs- und Anstrichstoffe sowie wässrige Reinigungsmittelformulierungen eine Reihe von Hilfsstoffen, wie z. B. Emulgatoren zur Emulgierung der wasserunlöslichen Wirkstoffe oder auch Additive zur besseren Substratbenetzung und Feststoffdispergierung.

Als unerwünschte Begleiterscheinung bewirken diese oberflächenaktiven Substanzen aber, dass die bei der Herstellung oder bei der Applikation eingebrachte Luft in Form von Schaum stabilisiert wird.

Aber auch bei vielen anderen technischen Prozessen, besonders solchen, die Substanzen biologischen Ursprungs verarbeiten z. B. Eiweißstoffe, Saponine in der Zuckerindustrie oder beim Holzaufschluss zur Gewinnung von Cellulose in der Papierindustrie tritt Schaum als störende Nebenerscheinung auf.

Hier ist es notwendig Schaumverhütungsmittel oder Entschäumer zuzusetzen, da unter Umständen das Schäumen den ganzen Prozess sehr erschweren oder ganz in Frage stellen kann.

Als Entschäumerwirkstoffe kommen Öle verschiedenster Art in Frage, wie Organopolysiloxane, z.B. in Form von Siliconölen oder Polyoxyalkylen-Polysiloxan-Blockmischpolymerisaten, Polyether, pflanzliche oder tierische Öle, Paraffine oder Mineralöle. Dabei können in den Ölen feinteilige Feststoffe enthalten sein, welche die entschäumende Wirkung noch verstärken. Beispiel eines solchen geeigneten feinteiligen Feststoffes ist hochdisperse, pyrolytisch oder nasschemisch gewonnene Kieselsäure, die als Aerosil oder Sipernat im Handel erhältlich ist und durch Behandlung mit Organosiliciumverbindungen hydrophobiert sein kann. Weitere geeignete Feststoffe sind Metallseifen wie Magnesium-, Aluminium- und Calciumseifen sowie Polyethylen- und Amidwachse.

Diese aus dem Stand der Technik bekannten Entschäumerformulierungen sind in mehr oder weniger ausgeprägtem Umfang geeignet, die Schaumbildung in den unterschiedlichsten industriellen Prozesssen und Produkten zu verhindern oder bereits gebildeten Schaum zu zerstören. Es hat sich jedoch gezeigt, dass ihre entschäumende Anfangswirkung, insbesondere aber die Langzeitwirkung in mechanisch hoch beanspruchten Anwendungen wie beispielsweise Kühlschmiermitteln, nicht immer den gestiegenen technischen Anforderungen entspricht und daher verbesserungsbedürftig ist.

Der vorliegenden Erfindung liegt daher die Aufgabe zugrunde, geeignete Entschäumerformulierungen aufzufinden, welche verbesserte entschäumende Wirkung zeigen und diesen Effekt auch bei Lagerung in beispielsweise Kühlschmierstoffkonzentraten über längere Zeit beibehalten.

Diese der Erfindung zugrunde liegende Aufgabe wird überraschenderweise gelöst durch die Mitverwendung wässriger Emulsionen hochviskoser, hochmolekularer Organopolysiloxanverbindungen in wässriger Entschäumeremulsion, enthaltend mindestens einen entschäumenden Wirkstoff.

Gegenstand der vorliegenden Erfindung sind daher wässrige Entschäumeremulsionen, enthaltend mindestens einen entschäumenden Wirkstoff und gegebenenfalls übliche Hilfsund Zusatzstoffe, die zur Verbesserung der entschäumenden Wirkung Organopolysiloxanverbindungen mit einer Viskosität von ≥ 1 · 10⁶ mPas, vorzugsweise ≥ 2 · 10⁶ mPas als wässrige O/W-Emulsion enthalten.

Die erfindungsgemäß mitverwendbaren Organopolysiloxanverbindungen sind prinzipiell bekannt und lassen sich durch die allgemeine Formel (I) 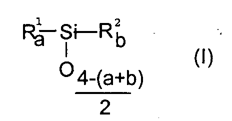 wiedergeben, worin
- R¹: ein Alkylrest mit 1 bis 4 Kohlenstoffatomen, vorzugsweise der Methylrest ist,
- R²: die Bedeutung von R³, R⁴, R⁵ hat, wobei
- R³: im Molekül gleich oder verschieden gegebenenfalls verzweigte, gegebenenfalls Mehrfachbindungen, gegebenenfalls Heteroatome enthaltende Kohlenwasserstoffreste mit 5 bis 26 Kohlenstoffatomen sein können,
- R⁴: einer der Reste -(CH₂)_{c}-(AO)_{d}-R⁷ mit
A Ethylen-, Propylen-, i-Propylen-, Butylen-, Styrolrest und
c 2 oder 3;
d 1 bis 100;
R⁷ H oder R³ sein kann, mit der Maßgabe, dass R⁴ nicht mehr als 10 % der Reste R² darstellt,
- R⁵: einer der Reste R¹, -OH, -OC₁₋₄, Arylrest, Styrolrest sein kann,

a einen beliebigen Wert von 1 bis ca. 2, vorzugsweise 1,5 bis 2, insbesondere 1,9 bis 2,
b einen beliebigen Wert von 0 bis 1 annehmen kann, mit der Maßgabe, dass die Viskosität der Verbindungen ≥ 1 · 10⁶ mPas beträgt.

Es ist dem Fachmann geläufig, dass die Verbindungen in Form eines Gemisches mit einer im Wesentlichen durch statistische Gesetze geregelten Verteilung vorliegen.

In Anlehnung an die Systematik organischer Polymere kann man nach Noll die folgenden Gruppen unterscheiden: mono-, di-, tri- oder tetrafunktionell, wofür sich die symbolischen Schreibweisen M, D, T und Q eingeführt haben:

[M] = (R¹, R²)₃SiO_{1/2}, [D] = (R¹, R²)₂SiO_{2/2},

[T] = (R¹, R²)₁ SiO_{3/2} und [Q] = SiO_{4/2}.

Erfindungsgemäß können die Bautypen M, D, T und Q mitverwendet werden in Form von
(a) linearen Polysiloxanen [MDₙM];
(b) schwach verzweigten bis kammartigen Polysiloxanen, die als verzweigende Bausteine trifunktionelle Siloxan-Einheiten [MₙDₘT₁] enthalten.
(c) vorzugsweise jedoch die vernetzten, gummielastischen oder elastomeren Polymeren, in denen die Moleküle mit Hilfe von T-Einheiten zu zwei- oder dreidimensionalen Netzwerken verknüpft vorliegen, sowie
(d) sogenannte MQ-Harze.

Diese Verbindungen können außerdem Silicium-funktionelle und/oder organofunktionelle Gruppen enthalten. Sie können je nach Kettenlänge, Verzweigungsgrad und Substituenten hochviskos, d.h. mit Viskositäten ≥ 1 · 10⁶ mPas, oder bei Raumtemperatur fest sein.

Erfindungsgemäß bevorzugt mitverwendet werden die vernetzten, gummielastischen oder elastomeren Polymeren (c) in denen R³ Alkylreste mit 5 bis 20 C-Atomen sind und in denen gegebenenfalls bis zu 5 % der R³-Alkylreste durch OH-Gruppen ersetzt sind.

Die erfindungsgemäß mitverwendeten Verbindungen und ihre Herstellung gehören zum bekannten Stand der Technik und werden in ihren niedrigviskosen Varianten für eine Vielzahl technischer Anwendungen eingesetzt wie beispielsweise als Emulgatoren in Farben und Lacken, als Wirkstoff und/oder Emulgator in kosmetischen Haut- und Haarpflegemitteln, in abhäsive Beschichtungen, als Entschäumer (vergleiche "Chemie und Technologie der Silicone", Walter Noll, Verlag Chemie, 1960).

Die erfindungsgemäß mitverwendeten Verbindungen der allgemeinen Formel (I) werden in Form ihrer wässrigen Emulsionen, in denen die mittlere Teilchengröße der diskontinuierlichen Phase im Bereich zwischen 0,1 bis ca. 10 µm, vorzugsweise ≤ 5 µm, insbesondere ≤ 3 µm ist, den handelsüblichen Entschäumerformulierungen zugesetzt. Emulsionen mit möglichst hohen Anteilen der Verbindungen der allgemeinen Formel (I) d.h. mit Gehalten um 50 Gew.-% sind bevorzugt, da sie die Endformulierungen nicht über Gebühr weiter verdünnen. Falls gewünscht oder erforderlich, können jedoch auch Emulsionen mit geringeren Wirkstoffanteilen hergestellt werden.

Die Herstellung dieser Emulsionen kann gemäß den aus dem Stand der Technik bekannten Verfahren erfolgen, wie beispielsweise beschrieben in der EP-A-0 771 629, EP-A-0 579 458, EP-A-0 463 431, US-A-4,814,376, US-A-5,302,658 oder den dort genannten weiteren Literaturstellen. Erfindungsgemäß bevorzugt sind Verfahren, die Teilchen im Bereich von ca. 0,1 bis 10 µm ermöglichen.

Die Verbesserung der entschäumenden Wirkung. der erfindungsgemäß verwendeten wässrigen Emulsionen der Organopolysiloxanverbindungen in handelsüblichen Entschäumeremulsionen, enthaltend mindestens einen entschäumenden Wirkstoff und gegebenenfalls übliche Hilfs- und Zusatzstoffe, ist um so überraschender, als diese Emulsionen allein keinerlei entschäumende Wirkung aufweisen (vergl. Tabelle Emulsion 1 bis 3 zu KSS-Konzentrat ohne Zusatz).

Sie können in allen technischen Verfahren wo Schaum als störende Nebenerscheinung auftritt und in denen wässrige Entschäumerformulierungen verwendet werden, insbesondere in stark schäumenden Aufbereitungsverfahren in denen Substanzen biologischen Ursprungs verarbeitet werden z. B. Eiweißstoffe, Saponine, in der Zuckerindustrie oder beim Holzaufschluss zur Gewinnung von Cellulose. in der Papierindustrie, aber auch bei der Kunststoffdispersionsherstellung und -verarbeitung und in tensidreichen Formulierungen wie z.B. in der Textilindustrie, der Druckfarbenindustrie und in der Metallbearbeitung als beispielsweise Kühlschmierstoffe (KSS).

### Beispiele:

### Emulsion 1:

50 %ige O/W-Emulsion eines vernetzten Siloxanes der allgemeinen Formel (I), worin R¹ ein Methylrest und R² ein C₁₆-Kohlenwasserstoffrest, a = 1,98 und b = 0,01 ist, eine Viskosität von > 2 · 10⁶ mPas aufweist und welches in einer mittleren Teilchengrößenverteilung von 0,2 µm vorliegt.

### Emulsion 2:

50 %ige O/W-Emulsion eines Siliconöles, welches eine Viskosität von 3 · 10⁶ mPas aufweist und in einer mittleren Teilchengrößenverteilung von 0,5 µm vorliegt.

### Emulsion 3:

50 %ige O/W-Emulsion eines vernetzten Siloxanes der allgemeinen Formel (I), worin R¹ ein Methylrest und R² ein C₈-Kohlenwasserstoffrest, a = 1,95 und b = 0,03 ist, eine Viskosität von > 2 · 10⁶ mPas aufweist und welches in einer mittleren Teilchengrößenverteilung von 1,5 µm vorliegt.

### Entschäumer 1:

Handelsübliches Antischaummittelkonzentrat auf Basis eines organomodifizierten Siloxanes, welches hydrophobe organische Feststoffe enthält und gemäß Beispiel 8 der DE-C-199 17 186 hergestellt wurde.

### Entschäumer 2:

Handelsübliche Antischaummittelemulsion, hergestellt gemäß Beispiel 5 der EP-B-0 658 361.

### Entschäumer 3:

Tego® Antifoam KS 95 (Handelsübliches Antischaummittelkonzentrat auf Basis von Pflanzenölen).

### Beispiele 1 bis 9:

Es wurden jeweils 2 Teile des Entschäumers mit 1 Teil der Emulsion gemäß nachstehender Matrix vermischt.

| | | | |
|---|---|---|---|
| | Entschäumer 1 | Entschäumer 2 | Entschäumer 3 |
| Emulsion 1 | Beispiel 1 | Beispiel 2 | Beispiel 3 |
| Emulsion 2 | Beispiel 4 | Beispiel 5 | Beispiel 6 |
| Emulsion 3 | Beispiel 7 | Beispiel 8 | Beispiel 9 |

### Prüfung der entschäumenden Wirkung:

50 g Kühlschmierstoffkonzentrat (A bis C) werden mit 0,025 g der zu prüfenden Mischung versetzt. Dieses Konzentrat wird 5 Minuten lang miteinander verrührt. In einem 100 ml Schüttelzylinder wird nun eine anwendungsfertige Kühlschmierstoffemulsion, durch Verdünnung von 3 g des vorher hergestellten Konzentrates mit 47 g demineralisiertem Wasser, hergestellt. Der Schüttelzylinder wird nun 30 mal innerhalb von 10 Sekunden kräftig geschüttelt. 1 Minute nach Beendigung des Schüttelns wird die Höhe des gebildeten Schaumes abgelesen.

Die Prüfung erfolgte in nachstehenden am Markt erhältlichen Kühlschmierstoff-Konzentraten (KSS):
Kühlschmierstoffkonzentrat A:
   Wassermischbarer KSS auf Basis von Mineralöl mit' sehr hohem Emulgatoranteil der Firma Oemeta.
Kühlschmierstoffkonzentrat B:
   Wassermischbarer halbsynthetischer KSS mit 25 % Wassergehalt der Firma Castrol.
Kühlschmierstoffkonzentrat C:
   Wassermischbarer KSS auf Mineralölbasis der Firma Houghton.

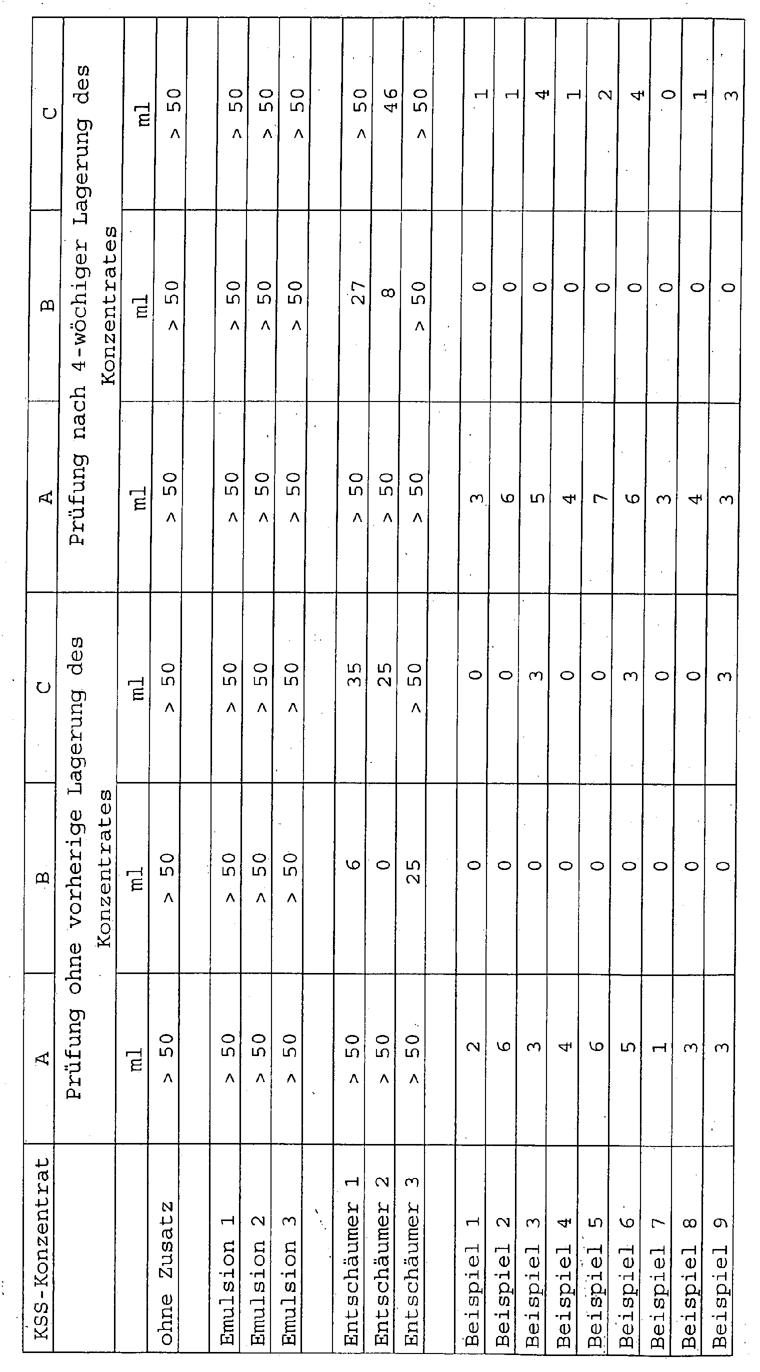

## Patentansprüche

1. Wässrige Entschäumeremulsion, enthaltend
A) mindestens einen entschäumenden Wirkstoff und gegebenenfalls übliche Hilfs- und Zusatzstoffe, die zur Verbesserung der entschäumenden Wirkung
B) Organopolysiloxanverbindungen mit einer Viskosität der Siloxane von ≥ 1 · 10⁶ mPas als wässrige O/W-Emulsion enthalten.

2. Wässrige Entschäumeremulsion, gemäß Anspruch 1, **dadurch gekennzeichnet, dass** die mittlere Teilchengröße der diskontinuierlichen Phase in Komponente B) im Bereich zwischen 0,1 µm und 10 µm liegt.

3. Wässrige Entschäumeremulsion, gemäß den Ansprüchen 1 und 2, **dadurch gekennzeichnet, dass** die Organopolysiloxanverbindungen in Komponente B) Verbindungen der allgemeinen Formel (I) 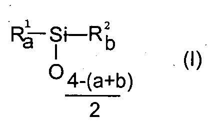 sind, worin
R¹ ein Alkylrest mit 1 bis 4 Kohlenstoffatomen, vorzugsweise der Methylrest ist,
R² die Bedeutung von R³, R⁴, R⁵ hat, wobei
R³ im Molekül gleich oder verschieden gegebenenfalls verzweigte, gegebenenfalls Mehrfachbindungen, gegebenenfalls Heteroatome enthaltende Kohlenwasserstoffreste mit 5 ,bis 26 Kohlenstoffatomen sein können,
R⁴ einer der Reste - (CH₂) _{c}- (AO) _{d}-R⁷ mit
A Ethylen-, Propylen-, i-Propylen-, Butylen-, Styrolrest und
c 2 oder 3;
d 1 bis 100;
R⁷ H oder R³ sein kann, mit der Maßgabe, dass R⁴ nicht mehr als 10 % der Reste R² darstellt,
R⁵ einer der Reste R¹, -OH, -OC₁₋₄, Arylrest, Styrolrest sein kann,
a einen beliebigen Wert von 1 bis ca. 2,
b einen beliebigen Wert von 0 bis 1 annehmen kann, mit der Maßgabe, dass die Viskosität der Verbindungen ≥ 1· 10⁶ mPas beträgt.

4. Wässrige Entschäumeremulsion, gemäß den Ansprüchen 1 bis 3, **dadurch gekennzeichnet, dass** die Organopolysiloxanverbindungen in Komponente B) vernetzte, gummielastische oder elastomere Polymere sind.

5. Wässrige Entschäumeremulsion, gemäß den Ansprüchen 1 bis 4, **dadurch gekennzeichnet, dass** die Organopolysiloxanverbindungen in Komponente B) Verbindungen der allgemeinen Formel (I) sind, in denen R³ Alkylreste mit 5 bis 20 C-Atomen sind und in denen gegebenenfalls bis zu 5 % der R³-Alkylreste durch OH-Gruppen ersetzt sind.

6. Wässrige Entschäumeremulsion, gemäß den Ansprüchen 1 bis 5, **dadurch gekennzeichnet, dass** die Organopolysiloxanverbindungen in Komponente B) Verbindungen der allgemeinen Formel (I) sind, in denen a zwischen 1,5 und ca. 2 liegt.

7. Wässrige Entschäumeremulsion, gemäß den Ansprüchen 1 bis 6, **dadurch gekennzeichnet, dass** die Organopolysiloxanverbindungen in Komponente B) Verbindungen der allgemeinen Formel (I) sind, in denen b < 0,5, insbesondere b < 0,1 ist.

8. Mittel zur Verstärkung von Entschäumungsformulierungen, enthaltend als Komponente B) mindestens eine Verbindung der allgemeinen Formel (I) 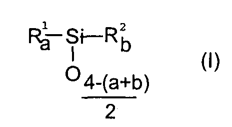 worin
R¹ ein Alkylrest mit 1 bis 4 Kohlenstoffatomen, vorzugsweise der Methylrest ist,
R² die Bedeutung von R³, R⁴, R⁵ hat, wobei
R³ im Molekül gleich oder verschieden gegebenenfalls verzweigte, gegebenenfalls Mehrfachbindungen, gegebenenfalls Heteroatome enthaltende Kohlenwasserstoffreste mit 5 bis 26 Kohlenstoffatomen sein können,
R⁴ einer der Reste - (CH₂)_{c}- (AO) _{d}-R⁷ mit
A Ethylen-, Propylen-, i-Propylen-, Butylen-, Styrolrest und
c 2 oder 3;
d 1 bis 100;
R⁷ H oder R³ sein kann, mit der Maßgabe, dass R⁴ nicht mehr als 10 % der Reste R² darstellt,
R⁵ einer der Reste R¹, -OH, -OC₁₋₄, Arylrest, Styrolrest sein kann,
a einen beliebigen Wert von 1 bis ca. 2,
b einen beliebigen Wert von 0 bis 1 annehmen kann, mit der Maßgabe, dass die Viskosität der Verbindungen ≥ 1 · 10⁶ mPas beträgt.

9. Mittel zur Verstärkung von Entschäumungsformulierungen gemäß Anspruch 8, **dadurch gekennzeichnet, dass** die Verbindungen der allgemeinen Formel (I) in Komponente B) in Form ihrer ca. 50 %igen wässrigen Konzentrate, in denen die mittlere Teilchengröße der diskontinuierlichen Phase im Bereich zwischen 0,1 µm und 10 µm liegt, vorliegen und verwendet werden.

10. Verwendung der wässrigen Entschäumerformulierungen gemäß den Ansprüchen 1 bis 7 zur Entschäumung von wässrigen Kühlschmierstoffen.
